Europäisches Patentamt

European Patent Office

Office européen des brevets

(19)

(11) Veröffentlichungsnummer: **0 261 453 B1**

## (12) EUROPÄISCHE PATENTSCHRIFT

(45) Veröffentlichungstag der Patentschrift: **08.01.92**

(21) Anmeldenummer: **87112705.6**

(22) Anmeldetag: **01.09.87**

(51) Int. Cl.⁵: **B60R 22/34**, B60R 22/44

(54) **Vorrichtung zum Einstellen der Gurtbandlänge eines Gurtband-Sicherheitssystems.**

(30) Priorität: **18.09.86 DE 3631702**

(43) Veröffentlichungstag der Anmeldung:
**30.03.88 Patentblatt 88/13**

(45) Bekanntmachung des Hinweises auf die
Patenterteilung:
**08.01.92 Patentblatt 92/02**

(84) Benannte Vertragsstaaten:
**DE FR GB NL SE**

(56) Entgegenhaltungen:
**DE-U- 7 338 777**
**DE-U- 8 430 437**
**GB-A- 1 016 223**

(73) Patentinhaber: **Van Riesen & Co.**
**Industriestrasse 8**
**W-2080 Pinneberg(DE)**

(72) Erfinder: **Van Riesen, Reiner**
**Besenheide 36**
**W-2200 Elmshorn(DE)**

(74) Vertreter: **Wilcken, Thomas, Dipl.-Ing. et al**
**Musterbahn 1**
**W-2400 Lübeck(DE)**

## Beschreibung

Die Erfindung geht aus von einer Vorrichtung zum Einstellen der Gurtbandlänge eines Gurtband-Sicherheitssystems, bei der an einem Rahmen ein Wickelkörper drehbar gelagert ist, von dem das Gurtband bei Betätigung einer Taste gegen die Kraft einer Feder geführt abwickelbar und mit der Kraft dieser Feder selbsttätig darauf aufwickelbar ist, wobei der Wickelkörper mittels einer durch die Taste lösbaren Sperre mit dem Rahmen formschlüssig in Eingriff steht.

Eine derartige Vorrichtung ist in dem DE-U-73 38 777 beschrieben. Hierbei ist der Wickelkörper als rohrartiger, zusammengesetzter Hohlkörper ausgebildet, dessen Innenwandung mit einer Kerbverzahnung profiliert ist. Der Hohlkörper erstreckt sich mit seinem einen Ende in einen Rahmen hinein, während das andere Ende des Wickelkörpers vor dem Rahmen endet, wobei der Rahmen selbst wiederum in einem Gehäuse befestigt ist. Eine als Arretierbolzen ausgebildete, aus dem genannten anderen Ende des Wickelkörpers herausragende Betätigungstaste weist an ihrem Außenumfang eine längere Außenkerbverzahnung auf, die in Ruhestellung (Nichtbetätigung) der Taste aus dem Wickelkörper herausragt und sich in ein Lach des Rahmens hineinerstreckt, das mit einer entsprechenden Innenkerbverzahnung versehen ist. Eine im Innern des Wickelkörpers vorgesehene Druckfeder hält die Betätigungstaste in dieser Ruhestellung. Beim Drücken der Taste gelangt ihre Verzahnung von dem Rahmen außer Eingriff, so daß eine Aufwickelfeder des Wickelkörpers in Umdrehung versetzt wird und den daran befestigten Gurt aufwikkelt.

Diese Vorrichtung ist im Verhältnis mit erhöhten Kosten herzustellen, denn die gesamte axiale Durchgangsbohrung des hohlen Wickelkörpers ist mit der Innenkerbverzahnung versehen, obwohl eine solche nur etwa entsprechend dem axialen Verstellhub der Betätigungstaste erforderlich ist. Des weiteren muß der Rahmen wegen seiner relativen Dünnwandigkeit zumindest im Bereich des Kerbloches für die formschlüssige Aufnahme der Betätigungstaste aus sehr festem Material bestehen, wenn die Kerbverzahnung des Loches dauerhaft funktionieren soll, welche Bedingungen auch für denjenigen Abschnitt der Taste gelten, der in das Kerbloch axial eingreift, da die axiale Eingriffstiefe der Verzahnungen an dieser Stelle gering ist. Die Verwendung von Kunststoff sichert bei der gezeigten Verzahnungskonstruktion keine dauerhaft sichere Funktion der Einrastung, und die Verwendung von Metallwerkstoff bedingt höhere Fertigungskosten. Weiterhin ist der Wickelkörper mehrteilig aufgebaut und erfordert deshalb mehrere Arbeitsgänge zu seiner Herstellung mit daraus resultierenden höheren Herstellungskosten. Auch ist ein Gehäuse erforderlich, das nicht nur den Rahmen und alle anderen Teile der Vorrichtung aufzunehmen hat, sondern auch für die exakte Lagerung des Wickelkörpers im Bereich der Betätigungstaste und für die sichere Wiedereinrastung dieser Taste in den Rahmen verantwortlich ist.

In der GB-A-10 16 223 ist eine weitere Gurtband-Verstellvorrichtung der in Rede stehenden Art beschrieben. Diese kompakt aufgebaute Vorrichtung weist im Bereich des einen Endes des Wickelkörpers eine Kupplung der Scheibenbauart mit radialer Verzahnung auf, welch letztere in eine radiale Verzahnung des Wickelkörpers eingreift. Im Bereich des anderen Endes des Wickelkörpers ist die Betätigungstaste in einem Gehäuse der Vorrichtung gelagert. Diese Taste ist mit einer zentralen Betätigungsstange versehen, die sich durch den hohlen Wickelkörper hindurch erstreckt, um die erwähnte Kupplung betätigen zu können. Diese Stange und die axial nachgiebig ausgebildete Kupplung mit ihrer zusätzlichen Betätigungsfeder stellen zusätzliche Bauteile dar, wobei die genannten Verzahnungen aufgrund ihrer radialen Erstreckung eine kompliziertere Form aufweisen. Aus dem Vorstehenden ergibt sich, daß auch diese Vorrichtung relativ hohe Kosten zu ihrer Herstellung erfordert. Des weiteren ist sie auch nicht dauerhaft funktionssicher, denn die Verzahnungen werden sich im Laufe der Zeit in ihrem Kopfbereich abnutzen, so daß ein Überratschen der Verzahnungen eintreten wird.

Die Aufgabe der Erfindung besteht in der Verbesserung einer Vorrichtung der einleitend angeführten Art dahingehend, daß die Vorrichtung bei kompaktem und bedienungsfreundlichem Aufbau eine sichere Funktion dauerhaft gewährleistet und kostengünstig hergestellt werden kann.

Die Lösung der Aufgabe ist in dem Patentanspruch 1 angeführt. Eine bevorzugte Weitergestaltung der erfindungsgemäßen Vorrichtung ist in den Ansprüchen 2 und 3 angeführt.

Neben einer kompakten Bauweise und einer bedienungsfreundlichen Handhabung der erfindungsgemäßen Vorrichtung ist eine sichere Funktion derselben dauerhaft gewährleistet. Trotz im Verhältnis sehr kleiner Bauweise der lösbaren, zwischen dem Wickelkörper und dem Rahmen wirksamen Sperre kann diese hohe Sperrkräfte übertragen, wobei die Betätigungstaste bei ihrem Loslassen leicht und schnell wieder Einrasten kann. Eine Abnutzung der Verzahnungen der Sperre kann praktisch nicht eintreten. Vor allem aber kann die Vorrichtung sehr kostengünstig hergestellt werden. Der gesamte Wickelkörper einschließlich dessen axialer Fortsatz mit seinem zugehörigen Teil der Sperrverzahnung kann als Gußteil vorzugsweise aus Kunststoff hergestellt werden. Dies gilt auch für die gesamte Betätigungstaste einschließlich deren Verzahnungsaufbau und auch für den Rahmen mit seinem Sperrverzahnungsanteil. Insgesamt hat die erfindungsgemäße Vorrichung im Verhältnis zu vorbekannten Vorrichtungen weniger und das Gesamtgewicht der Vorrichtung herabsetzende Bestandteile, die im wesentlichen alle mittels der Gießtechnik hergestellt werden können und fast keine Nacharbeit erfordern, wodurch sich auch die Montagekosten aller Teile verringern. Da die erfindungsgemäße konstruktive Ausgestaltung der Sperre zwischen dem Wickelkörper und dem Rahmen bei gesteigerter Funktionalität der Sperre von kompaktem Aufbau ist, ist für die äußere Formgestaltung der Vorrichtung mehr Spielraum gegeben, so daß Designwünsche besser berücksichtigt werden können, weil hierfür nun mehr Platz zur Verfügung steht.

Die Erfindung ist nachstehend anhand eines in der anliegenden Zeichnung dargestellten Ausführungsbeispieles näher erläutert. Es zeigen:

Figur 1    eine Aufsicht auf das Ausführungsbeispiel mit teilweisen Schnittdarstellungen,

Figur 2    eine Seitenansicht gemäß dem Pfeil II in Fig. 1,

Figur 3    eine Teilschnittdarstellung aus Fig. 1 in vergrößertem Maßstab und mit entriegelter Sperre.

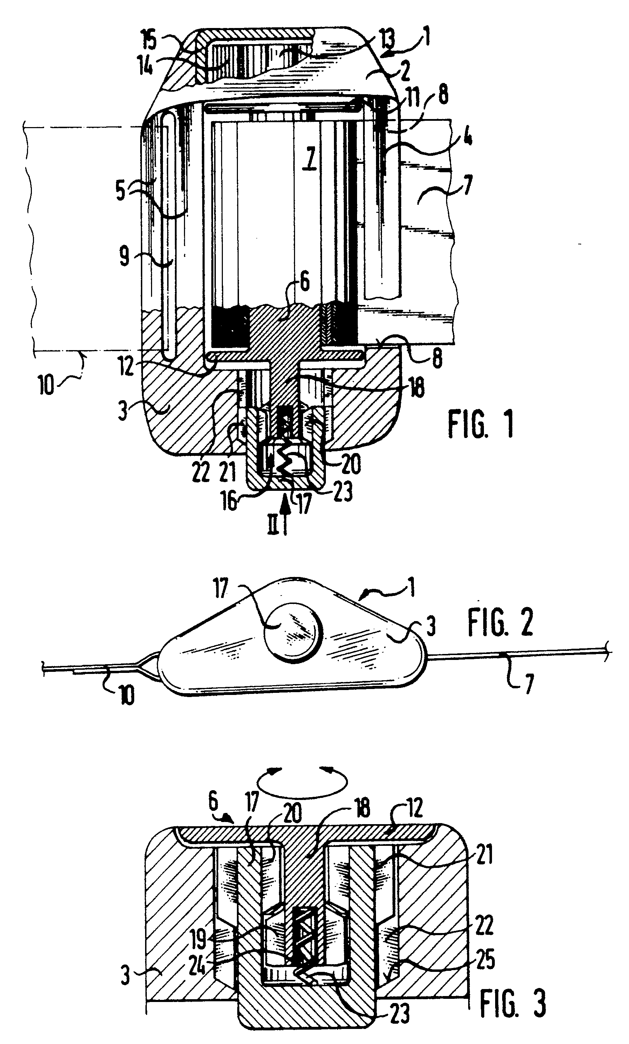

Das in Fig. 1 gezeigte Ausführungsbeispiel besteht aus einem im Grundriß im wesentlichen rechteckigen Rahmen 1, der aus zwei seitlichen und sich gegenüberliegenden Gehäuseabteilen 2 und 3 sowie aus zwei diese Abteile miteinander verbindenden Streben 4 und 5 gebildet ist, und aus einem Wickelkörper 6, an dem ein Gurtband 7 befestigbar ist. Während die eine Strebe 4 mit einem in Zugrichtung des Gurtbandes 7 durchgängigen Schlitz 8 zur Führung dieses Bandes versehen ist, weist die andere Strebe 5 einen üblichen Schlitz 9 zur Befestigung eines anderen Gurtbandes 10 auf, das in der Regel unverstellbar am Rahmen 1 angebracht ist. Die vom Wickelkörper 6 maximal zu tragende Wickellänge des Gurtbandes 7 beträgt im allgemeinen 20 bis 35 cm. Der Wickelkörper ist hauptsächlich ein zylindrisches Bauteil, das aus Kunststoff, aber auch aus Leichtmetall hergestellt sein kann und in den seitlichen Gehäuseabteilen 2 und 3 drehbar gelagert ist sowie ferner zwei Flansche 11 und 12 zur seitlichen Führung der Wickellänge des Gurtbandes 7 aufweist.

Der Wickelkörper 6 weist an seinem einen Ende einen in das Gehäuseabteil 2 hineinragenden Stutzen 13 auf, an dem in an sich bekannter Weise eine Spiralfeder 14 angreift, die andererseits an dem Gehäuseabteil befestigt ist und den Wickelkörper mit einer Anfangsvorspannung belastet. Eine Kappe 15 bildet den äußeren Seitenabschluß des Gehäuseabteils und deckt somit den Stutzen und die Spiralfeder ab.

Das andere Gehäuseabteil weist eine allgemein mit 16 bezeichnete Sperre auf, die formschlüssig sowohl mit dem Wickelkörper 6 als auch mit einer Taste 17 in Verbindung steht, die ihrerseits das Sperrmoment auf den Rahmen 1 überträgt.

Die Taste ist vorzugsweise hutförmig ausgebildet und an ihrem inneren, zylindrischen Randbereich beidseitig mit Formschlußmitteln versehen, die entsprechend formschlüssig sowohl mit dem Gehäuseabteil 3 als auch mit dem Wickelkörper 6 zusammenwirken und auf diese Weise die Sperre bilden. Hierzu ist der Wickelkörper 6 an seinem anderen Ende mit einem axialen Fortsatz 18 versehen, der wiederum an seinem freien Ende mit einer geraden Stirnradverzahnung 19 versehen ist. Diese Verzahnung 19 greift gemäß Fig. 1 in eine korrespondierende gerade Stirnradverzahnung 20 der Taste 17 ein und bildet mit dieser Verzahnung ein erstes, radial inneres Verzahnungspaar.

Ein zweites, radial äußeres Verzahnungspaar ist zwischen der hutförmigen Taste 17 und dem Gehäuseabteil 3 vorgesehen, um auf den Wickelkörper 6 eine Sperrwirkung auszuüben. Hierzu ist die Taste auf ihrer zylindrischen Außenseite mit einer weiteren geraden Stirnradverzahnung 21 versehen, die in eine gerade Stirnradverzahnung 22 des Gehäuseabteils 3 eingreift, wodurch die Taste 17 drehfest mit dem Gehäuseabteil verbunden ist. Um eine gute Führung der Taste in dem Gehäuseabteil vorzusehen, kann dessen Verzahnung 22 eine Gesamtlänge aufweisen, die der Summe aus der Länge der Verzahnung 22 und dem Betätigungshub der Taste entspricht. Weiterhin ist klar, daß der Hub der Taste so groß ist, daß deren innere Verzahnung 20 außer Eingriff von der Verzahnung 19 des Fortsatzes 18 des Wickelkörpers 6 gelangen kann.

Ferner ist die Taste 17 koaxial zum Fortsatz 18 bzw. zum Wickelkörper 6 angeordnet und in Richtung der Längsachse des Wickelkörpers beweglich bzw. verstellbar. Die Ausgangsstellung der Taste wird durch eine Druckfeder 23 eingehalten, die einerseits in einer zentralen Ausnehmung 24 des Fortsatzes 18 gehaltert ist und andererseits innen an der Taste angreift. Die Taste selbst wiederum liegt gegen eine Anschlagschulter 25 des Gehäuseabteils 3 an, und zwar mit ihrer Außenverzahnung 21.

Die vorstehend beschriebene Vorrichtung arbeitet wie folgt. Soll eine Länge des Gurtbandes 7 abgewickelt werden, wird die Taste 17 hineingedrückt, so daß die Sperre 16 entriegelt ist, wie Fig. 3 zeigt. Der Wickelkörper 6 ist nun frei drehbar und die gewünschte Gurtbandlänge ist gegen die Kraft der Spiralfeder 14 herausziehbar. Ein Loslassen der Taste bewirkt wieder eine Verriegelung des

Wickelkörpers (Fig. 1). Soll eine Länge des Gurtbandes wieder eingezogen werden, wird die Taste 17 wiederum gedrückt, so daß die Spiralfeder 14 ein Aufwickeln des Gurtbandes 7 vollzieht, wonach die Taste wieder losgelassen wird und somit eine erneute Verriegelung der Sperre 16 erfolgt.

## Patentansprüche

1. Vorrichtung zum Einstellen der Gurtbandlänge eines Gurtband-Sicherheitssystems, bei der an einem Rahmen (1) ein Wickelkörper (6) drehbar gelagert ist, von dem das Gurtband (7) bei Betätigung einer Taste (17) gegen die Kraft einer Feder (14) geführt abwickelbar und mit der Kraft dieser Feder selbsttätig darauf aufwickelbar ist, wobei der Wickelkörper (6) mittels einer eine axiale Sperrverzahnungsausbildung aufweisenden, durch die Taste (17) lösbaren Sperre (16) mit dem Rahmen (1) formschlüssig in Eingriff steht, dadurch gekennzeichnet, daß der Wickelkörper (6) einen axialen, in ein Abteil (3) des Rahmens (1) hineinragenden Fortsatz (18) mit einer Außenverzahnung (19) an seinem freien Ende aufweist, die in Eingriff mit einer Innenverzahnung (20) der hutförmig ausgebildeten, zum Fortsatz (18) koaxial verstellbar angeordneten Taste (17) steht, daß die hutförmige Taste (17) an ihrem Außenumfang mit einer weiteren Verzahnung (21) versehen ist, die mit einer Innenverzahnung (22) des Abteils (3) des Rahmens (1) in ständigem Eingriff steht, und daß die durch das erstgenannte Verzahnungspaar (19,20) gebildete Verzahnungsverbindung durch axiale Betätigung der durch das zweite Verzahnungspaar (21,22) drehsicher gelagerten Taste (17) aufhebbar ist.

2. Vorrichtung nach Anspruch 1, dadurch gekennzeichnet, daß der Fortsatz (18) an seinem freien Ende eine zentrale Ausnehmung (24) aufweist, in der eine Druckfeder (23) gehaltert ist, die die Taste (17) in ihre Ausgangsstellung gegen einen Anschlag (25) des Rahmens (1) gedrückt hält.

3. Vorrichtung nach Anspruch 1 oder 2, dadurch gekennzeichnet, daß der Rahmen (1) einen Durchführungsschlitz (8) für das vom Wickelkörper (6) getragene Gurtband (7) aufweist.

## Claims

1. Device for adjusting the belt length of a belt locking system, in which on a frame (1) there is rotatably mounted a winding body (6) from which on operating a button (17) the belt (7) can be unwound in a controlled manner against the force of a spring (14) and through the force of this spring can be automatically wound upon it, in which the winding body (6) is in positive engagement with the frame (1) through a latch (16), having an axial ratchet construction, which can be released by the button, characterised in that the winding body (6) has an axial extension (18) protruding into an apartment (3) of the frame (1) with an outer toothing (19) at its free end which is in engagement with an inner toothing (20) of the cap - shaped button (17) which is arranged for coaxial adjustment to the extension (18), that the cap-shaped button (17) is provided with a further toothing (21) on its outer circumference which is in constant engagement with an inner toothing (22) of the department (3) of the frame (1), and that the toothing connection formed by the first-named toothing pair (19, 20) can be cancelled by axial operation of the button (17) which is non-rotatably supported by the second toothing pair (21,22).

2. Device according to claim 1, characterized in that the free end of the extension (18) has a central recess (24) in which is held a pressure spring (23) which retains the button (17) in its starting position pressed against a stop (25) of the frame (1).

3. Device according to claim 1 or 2, characterised in that the frame has a slot (8) for passing through the belt (7) carried by the winding body (6).

## Revendications

1. Dispositif pour ajuster la longueur de la sangle d'un système de ceinture de sécurité, dans lequel sur un cadre (1) est monté rotatif un corps d'enroulement (6), d'où la sangle (7) peut être déroulée avec guidage lors de l'actionnement d'une touche (17) à l'encontre de la force d'un ressort (14) et peut être enroulée automatiquement sur ce corps sous l'action de la force de ce ressort, le corps d'enroulement (6) engrenant selon une liaison par formes complémentaires avec le cadre (1), au moyen d'un cliquet (16) qui possède une denture axiale de blocage et peut être dégagé au moyen de la touche (17), caractérisé en ce que le corps d'enroulement (6) possède un prolongement axial (18), qui pénètre dans une partie (3) du cadre (1) et possède, au niveau de son extrémité libre, une denture extérieure (19) qui engrène avec une denture intérieure (20) de la touche en forme de chapeau (17), disposée de manière à être déplaçable coaxialement par rapport à l'appendice saillant (18), en ce que la couche en forme de chapeau (17) comporte, sur son pourtour extérieur, une autre denture (21), qui engrène en permanence avec une denture interieure (22) de la partie (3) du cadre (1), et en ce que la liaison par dentures formée par le premier couple indiqué de dentures [19, 20) peut être supprimée au moyen de l'actionnement axial de la touche (17) supportée avec blocage en rotation par le second couple de dentures (21, 22).

2. Dispositif selon la revendication 1, caractérisé en ce que le prolongement (18) comporte, sur son extrémité libre, un évidement central (24), dans lequel est maintenu un ressort de pression (23), qui maintient la touche (17) repoussée, dans sa position initiale, contre une butée (25) du cadre (1).

3. Dispositif selon la revendication 1 ou 2,caractérisé en ce que le cadre (1) possède une fente de passage (8) pour la sangle (7) portée par le corps d'enroulement (6) d'enroulement (6).

FIG. 1

FIG. 2

FIG. 3